# EUROPÄISCHE PATENTSCHRIFT

(11) **EP 1 825 079 B1**
(45) Veröffentlichungstag und Bekanntmachung des Hinweises auf die Patenterteilung: **01.04.2009**
(21) Anmeldenummer: 05810368.0
(22) Anmeldetag: 25.11.2005
(51) Int. Cl.: E04G 21/04, F16L 11/12

(54) **ENDSCHLAUCH FÜR DEN AUSTRAG VON DICKSTOFFEN**
END TUBE FOR THE DISCHARGE OF VISCOUS SUBSTANCES
TUYAU D'EXTREMITE POUR EVACUER DES MATIERES EPAISSES

(30) Priorität: 13.12.2004 DE 102004060106
(43) Veröffentlichungstag der Anmeldung: 29.08.2007
(73) Patentinhaber: Putzmeister Concrete Pumps GmbH, 72631 Aichtal (DE)
(72) Erfinder: QUIER, Austin, Derbyshire Derbyshire DE45 1BQ (GB)
(74) Vertreter: Wolf, Eckhard
(86) Internationale Anmeldenummer: PCT/EP2005/012610
(87) Internationale Veröffentlichungsnummer: WO 2006/063670

(56) Entgegenhaltungen:
- EP-A- 0 415 690
- BE-A1- 906 003
- DE-A1- 2 252 206
- DE-A1- 10 011 471
- DE-B- 1 086 500
- FR-A- 2 414 850
- FR-A- 2 567 986
- FR-A- 2 678 703
- GB-A- 1 245 968
- US-A- 3 610 289

## Beschreibung

Die Erfindung betrifft einen Venteilermast mit mehreren verbundenen Mastarmen und einem Endschlauch für den Austrag von Dickstoffen, insbesondere von Flüssigbeton, der mit seinem eintrittsseitigen Ende an eine Druckförderleitung anschließbar ist und an seinem austrittsseitigen Ende eine Austragsöffnung für die Dickstoffe aufweist und der aus biegsamem Material besteht.

Das Dokument DE 2252206 offenbart einen gewöhnlichen Verteilermast.

Endschläuche dieser Art sind beispielsweise Bestandteile einer Fördereinrichtung für Flüssigbeton. Sie bilden dort das Ende einer Druckfördereinrichtung, deren Druckförderleitungen am Betonverteilermast einer stationären oder mobilen Betonpumpe angeordnet sein können. Der Endschlauch ist mit seinem eintrittsseitigen Ende an die über eine Pumpe mit Flüssigbeton beaufschlagte Druckförderleitung angeschlossen und hängt im Betriebszustand von der Mastspitze aus senkrecht nach unten. Damit ihn ein Bediener (Endschlauchführer) einfach von Hand in einem gewissen Umkreis mit seiner Ausltragsöffnung in eine Einbringstelle führen kann, weist er neben seiner gelenkigen Aufhängung an der Mastspitze eine gewisse Biegsamkeit auf. Er besteht deshalb überwiegend aus einem biegsamen Material, beispielsweise aus Gummi oder einem elastomeren Kunststoff. Bei der Förderung von Dickstoffen dieser Art kann es immer wieder zu einer Stopferbildung in den Förderleitungen oder im Endschlauch kommen. Solche Stopfer werden üblicherweise durch den Aufbau eines entsprechenden Überdrucks in der Druckförderleitung gelöst. Beim Lösen von Stopfern treten größere Kräfte am Endschlauch auf, die aufgrund der Biegsamkeit zu einem Ausschlagen des Endschlauchs führen können. Auch beim Anpumpen der Dickstoffsäule oder beim Freiwerden von Lufteinschlüssen kann es zu einem Ausschlagen des Endschlauches kommen. Dabei kann es für den Bediener zu gefährlichen Situationen kommen, wenn er den Endschlauch nicht mehr festhalten kann.

Ausgehend hiervon liegt der Erfindung die Aufgabe zugrunde, den bekannten Endschlauch der eingangs angegebenen Art dahingehend zu verbessern, dass die Gefahr von Ausschlägen des Endschlauchs beim Lösen von Stopfern reduziert wird.

Zur Lösung dieser Aufgabe wird die in den Patentansprüch 1, 2 oder 3 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass mindestens zwei an einer Übergangsstelle miteinander verbundene Schlauchpartien mit unterschiedlicher Biegesteifigkeit vorgesehen sind. Eine erste Ausgestaltung der Erfindung sieht vor, dass die Biegesteifigkeit der austrittsseitigen Schlauchpartie größer als die der eintrittsseitigen Schlauchpartie ist. Die geringere Biegesteifigkeit wird durch eine geringere Härte bewirkt. Der Bereich geringerer Härte ermöglicht das Positionieren und Verteilen des austretenden Dickstoffmaterials, während der Bereich größerer Steifigkeit und Härte ein Ausschlagen des Endschlauches bei der Druckentladung verhindert.

Gemäß einer vorteilhaften Ausgestaltung der Erfindung weisen demgemäß die Schlauchpartien unterschiedlicher Biegesteifigkeit weisen ein elastomeres Schlauchmaterial unterschiedlicher Materialhärte auf. Die Schlauchpartien unterschiedlicher Biegesteifigkeit können bei gleichem Schlauchmaterial eine unterschiedliche Wandstärke aufweisen. Insbesondere ist dabei die Wandstärke der Schlauchpartien im Übergangsbereich zu- oder abnehmend ausgebildet, wobei der Innendurchmesser in den Schlauchpartien unterschiedlicher Biegesteifigkeit zweckmäßig konstant ist.

Die Endschläuche werden in Verbindung mit Druckförderleitungen für Dickstoffe, insbesondere für Flüssigbeton, eingesetzt, wobei der Endschlauch am Ende der Druckförderleitung angeordnet ist. Die Druckförderleitung wird auf einem Verteilermast einer stationären oder fahrbaren Dickstoffpumpe angeordnet wobei, der Verteilermast mehrere an Knickgelenken miteinander verbundene Mastarme aufweist. Die Druckförderleitung ist ihrerseits aus mehreren Abschnitten zusammengesetzt, die an ihrem einen Ende den Endschlauch tragen. Die Förderleitungs- abschnitte können aus einem Metall, vorzugsweise aus Stahl, oder aus einem Composite-Material, vorzugsweise aus faserverstärktem Kunststoff mit einer abriebfesten Innenbeschichtung, bestehen.

Vorteilhafterweise weist zumindest eine der Schlauchpartien eine Gewebeeinlage auf. Die Gewebeeinlagen in den Schlauchpartien hoher Steifigkeit können dabei dichter geflochten oder gewebt sein als in der Schlauchpartie mit niedriger Steifigkeit. Entsprechendes kann durch eine Veränderung des Abstands der Einlage von der Biegelinie erfolgen.

Eine weitere vorteilhafte Ausführungsvariante besteht darin, dass zumindest eine der Schlauchpartien ein Material höherer Festigkeit, z.B. eine Stahldrahteinlage aufweist. Auch hier kann die Einlagemenge oder -dichte in den verschiedenen Schlauchpartien unterschiedlich gewählt werden. Im speziellen Fall kann die Stahldrahteinlage in der Schlauchpartie höherer Steifigkeit dichter gewickelt sein als in der Schlauchpartie mit niedrigerer Steifigkeit.

Eine weitere vorteilhafte Ausgestaltung der Erfindung sieht vor, dass die Schlauchpartie mit größerer Steifigkeit eine Stahldrahteinlage und die Schlauchpartie mit kleinerer Steifigkeit eine Gewebeeinlage enthält.

Bei der Verwendung eines Schlauchmaterials aus einem gewickelten Kunststoffvlies, z.B. CFK, GFK oder Compound-Vlies, kann die unterschiedliche Biegesteifigkeit auch durch eine unterschiedliche Wickeldichte erzielt werden.

Vorteilhafterweise sind die Schlauchpartien unterschiedlicher Biegesteifigkeit an der Übergangsstelle einstückig miteinander verbunden. Grundsätzlich ist es jedoch auch möglich, dass die Schlauchpartien unterschiedlicher Biegesteifigkeit an der Übergangsstelle lösbar miteinander gekoppelt sind.

Im Folgenden wird die Erfindung anhand der in der Zeichnung in schematischer Weise dargestellten Ausführungsbeispiele näher erläutert. Es zeigen
- Fig. 1: die Mastspitze eines Verteilermasts einer fahrbaren Betonpumpe mit Endschlauch;
- Fig. 2a bis 2f: verschiedene Varianten eines Endschlauchs mit über die Län- ge unterschiedlicher Biegesteifigkeit in teilweise geschnittener, in ihrer Länge verkürzter Darstellung.

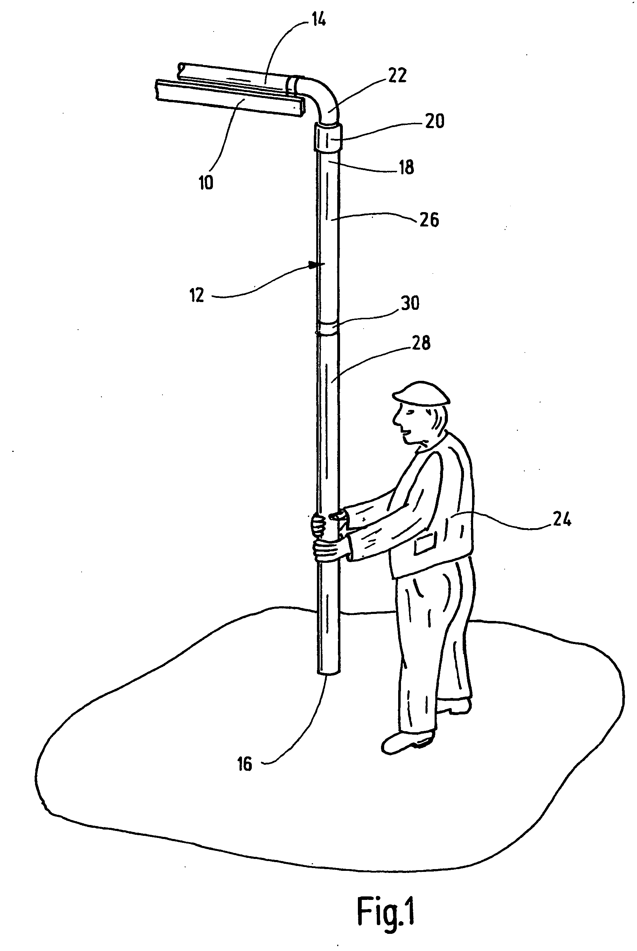

In Fig. 1 ist die Mastspitze 10 eines im übrigen nicht dargestellten, als Knickmast ausgebildeten Verteilermasts einer fahrbaren Betonpumpe gezeigt, die einen im Betriebszustand senkrecht nach unten hängenden Endschlauch 12 trägt, der an seinem oberen Ende an eine entlang dem Betonverteilermast geführte und über eine Pumpe mit Beton beaufschlagte Druckförderleitung 14 angeschlossen ist und durch dessen nach unten weisende Auslassöffnung 16 der geförderte Flüssigbeton in eine baustellenseitige Einbringstelle austritt. Der Endschlauch 12 trägt an seinem eintrittsseitigen Ende 18 einen metallischen Anschlussstutzen 20, mit dem er um seine Längsachse drehbar mit dem austrittsseitigen Ende 22 der Druckförderleitung 14 verbunden ist. Damit der Bediener 24 (Endschlauchführer) den Endschlauch 12 bei feststehender Mastspitze 10 in einem gewissen Umkreis über der Einbringstelle verschwenken kann, besteht der Endschlauch 12 aus einem biegsamen Material, beispielsweise aus Gummi oder aus einem elastomeren Kunststoff. Andererseits darf die Biegsamkeit des Endschlauchs 12 vor allem im austrittsseitigen, unteren Bereich nicht so groß sein, dass es beim Lösen von Stopfern zu einem Ausschlagen des Endschlauchs kommt, der eine Gefährdung des Bedieners 24 darstellen könnte.

Um dies zu erreichen, besteht der Endschlauch 12 bei dem in Fig. 1 gezeigten Ausführungsbeispiel aus zwei Schlauchpartien 26, 28, von denen die obere Schlauchpartie 26 eine geringere und die untere Schlauchpartie 28 eine größere Biegesteifigkeit aufweist. Die beiden Schlauchpartien 26, 28 sind in einem Übergangsbereich 30 einstückig miteinander verbunden.

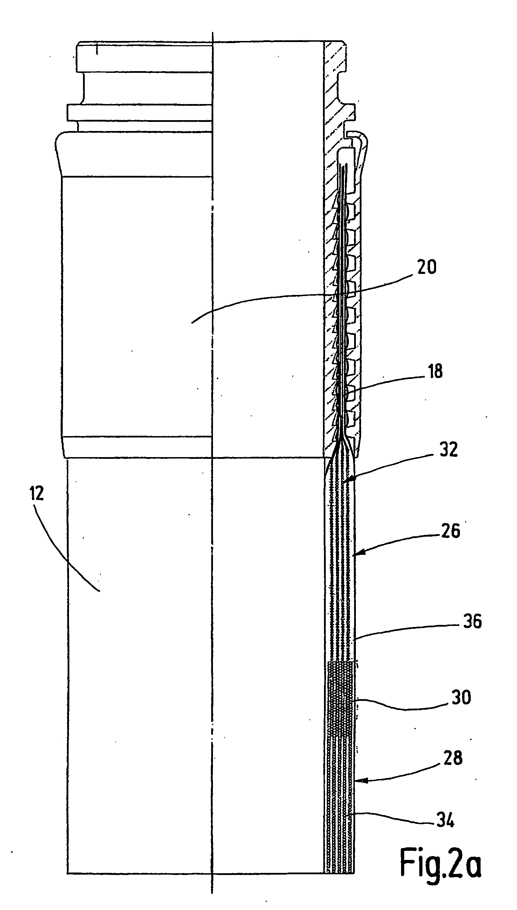

Die in Fig. 2a bis 2f schematisch dargestellten Ausführungsbeispiele zeigen unterschiedliche Varianten für den inneren Aufbau eines Endschlauchs mit unterschiedlich steifen Schlauchpartien.

Bei der in Fig. 2a gezeigten Ausführungsvariante besteht der Endschlauch aus einem über die gesamte Länge einheitlichen Gummimaterial, das im Bereich der oberen Schlauchpartie 26 eine Gewebeeinlage 32 und im Bereich der unteren Schlauchpartie 28 eine Stahldrahteinlage 34 enthält. Im Übergangsbereich 30 sind die Gewebeeinlage 32 und die Stahldrahteinlage 34 miteinander verknüpft. Das aus Gummi bestehende Strukturmaterial 36 weist über die gesamte Länge des Endschlauchs 12 die gleiche Shore-Härte auf. Die unterschiedliche Biegesteifigkeit der beiden Schlauchpartien 26 und 28 ergibt sich ausschließlich aus der unterschiedlichen Biegsamkeit der Einlagen 32, 34.

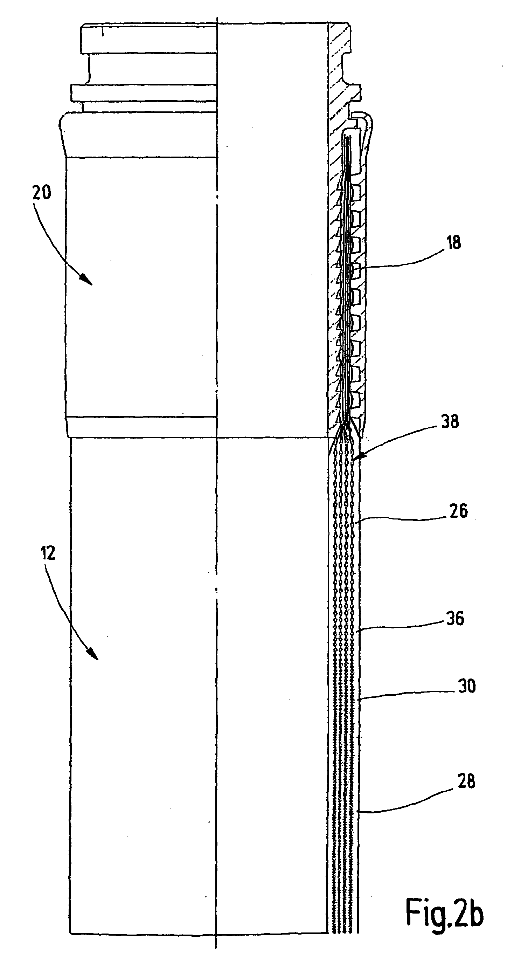

Bei dem Ausführungsbeispiel nach Fig. 2b ist eine von oben nach unten durchgehende Gewebeeinlage vorgesehen. Das aus Gummi bestehende Strukturmaterial 36 besteht durchgehend aus Gummi der gleichen Shore-Härte. Die unterschiedliche Biegesteifigkeit wird dadurch erzielt, dass im Bereich der oberen Schlauchpartie 26 die Gewebeeinlage 38 eine größere Maschenweite aufweist als im Bereich der unteren Schlauchpartie 28. Die Gewebeeinlage 38 ist auch im Übergangsbereich 30 nicht unterbrochen. Vielmehr wird dort lediglich die Maschenweite von oben nach unten stetig oder stufenweise verändert. Auch mit diesen Maßnahmen erhält man in der unteren Schlauchpartie 28 eine größere Biegesteifigkeit als in der oberen Schlauchpartie 26.

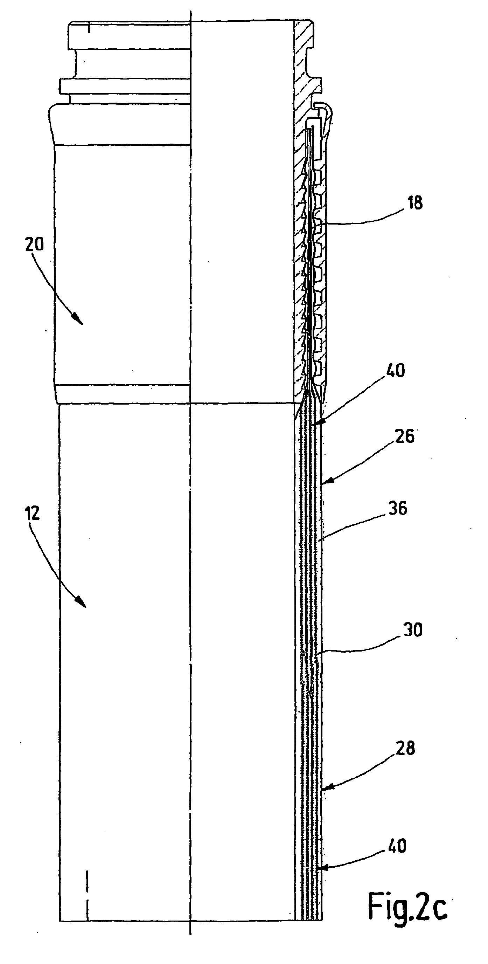

Bei dem Ausführungsbeispiel nach Fig. 2c befindet sich in der oberen und unteren Schlauchpartie 26, 28 eine Gewebeeinlage 40 mit konstanter Maschenweite. Der Endschlauch 12 ist hier aus zwei Teilschläuchen zusammengesetzt, die unter Bildung der oberen Schlauchpartie 26 eine weichere Gummimischung und in der unteren Schlauchpartie 28 eine härtere Gummimischung enthalten. Der Übergangsbereich 30 wird durch einen Vulkanisierbereich gebildet, in welchem die beiden Schlauchpartien 26, 28 miteinander vulkanisiert sind.

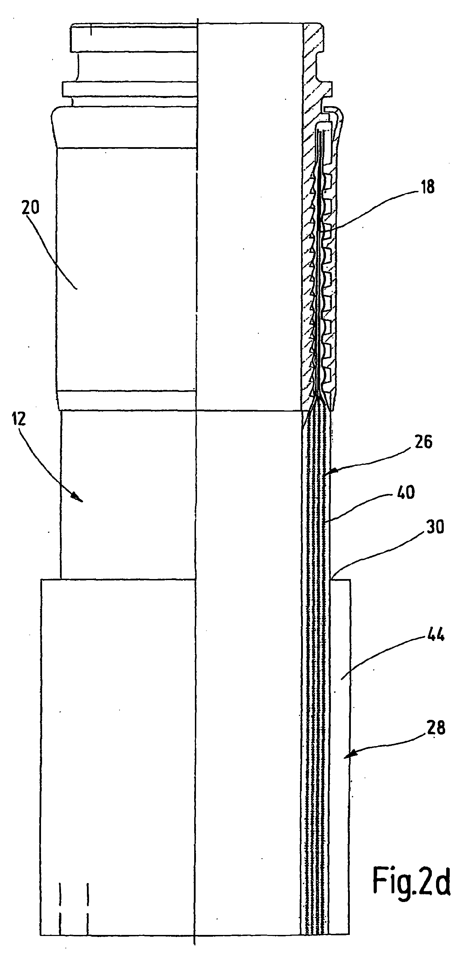

Bei dem Ausführungsbeispiel nach Fig. 2d ist ein Schlauch mit durchgehender Gewebeeinlage 42 und einem einheitlichen Strukturmaterial 36 vorgesehen. Im unteren Teil ist zur Bildung der biegesteiferen unteren Schlauchpartie 28 ein zusätzlicher elastomerer Überschlauch 44 aufvulkanisiert.

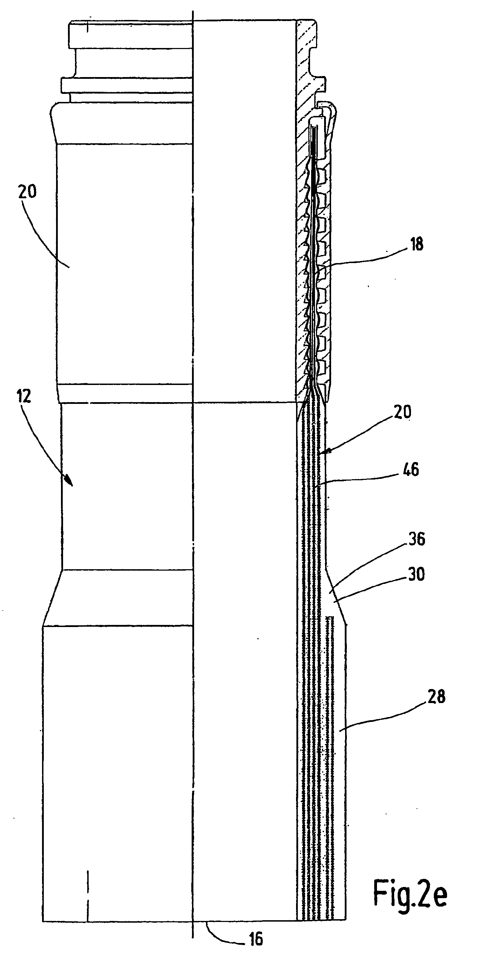

Bei dem Ausführungsbeispiel nach Fig. 2e ist ein durchgehender Gummischlauch mit Gewebeeinlage 46 vorgesehen, dessen Innendurchmesser konstant ist und der im Bereich der oberen Schlauchpartie 22 eine kleinere Wandstärke als im Bereich der unteren Schlauchpartie 28 aufweist. Die Wandstärke des Schlauchs nimmt in dem Übergangsbereich 30 von oben nach unten stetig zu.

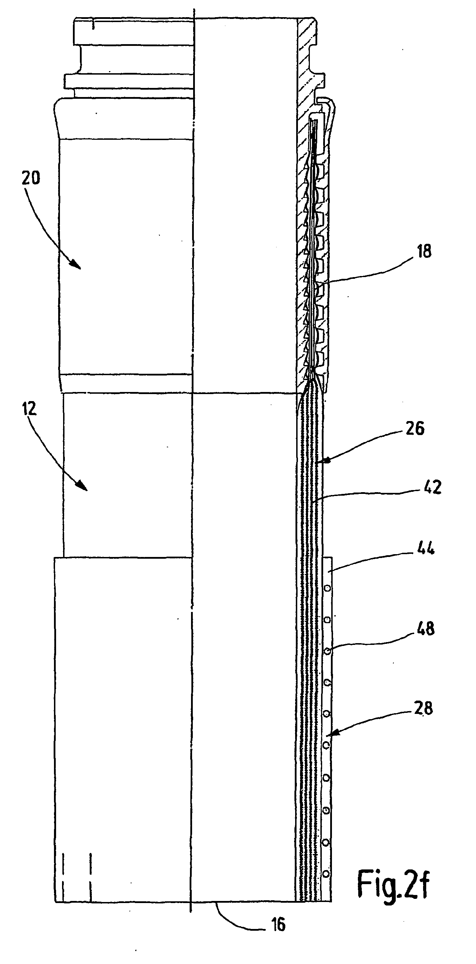

Das in Fig. 2f gezeigte Ausführungsbeispiel entspricht im wesentlichen dem Ausführungsbeispiel nach Fig. 2d. Auch hier ist ein Gummischlauch mit durchgehender Gewebeeinlage 42 vorgesehen, auf den ein Überschlauch 44 aufvulkanisiert ist. In den Überschlauch 44 ist hier eine Metallspirale 48 eingelassen, die es erlaubt, die Wandstärke des Überschlauchs 40 bei gleicher Biegesteifigkeit gegenüber dem Ausführungsbeispiel nach Fig. 2d zu verkleinern.

## Patentansprüche

1. Verteilermast einer Betonpumpe, mit mehreren, an Knickgelenken miteinander verbundenen Mastarmen und einer über die Mastarme geführten, aus mehreren Abschnitten zusammengesetzten, über eine Pumpe mit Flüssigbeton beauschlagbaren Druckförderleitung, an deren Ende im Bereich der Mastspitze ein senkrecht nach unten hängender, aus biegsamem Material bestehender Endschlauch mit einer eintrittsseitigen Schlauchpartie angeschlossen ist und an seiner austrittsseitigen Schlauchpartie eine Austragsöffnung für den Flüssigbeton aufweist, wobei die eintrittsseitige und die austrittsseitige Schlauchpartie an einer Übergangsstelle (30) miteinander verbunden sind, wobei die Biegesteifigkeit der austrittsseitigen Schlauchpartie von der Über gangsstelle (30) an größer als die der eintrittsseitigen Schlauchpartie ist, und wobei die Schlauchpartien (26, 28) unterschiedlicher Biegesteifigkeit ein elastomeres Schlauchmaterial (36) mit unterschiedlicher Materialhärte aufweisen.

2. Verteilermast einer Betonpumpe, insbesondere nach Anspruch 1, mit mehreren, an Knickgelenken miteinander verbundenen Mastarmen und einer über die Mastarme geführten, aus mehreren Abschnitten zusammengesetzten, über eine Pumpe mit Flüssigbeton beaufschlagbaren Druckförderieitung, an deren Ende im Bereich der Mastspitze ein senkrecht nach unten hängender, aus biegsamem Material bestehender Endschlauch mit einer eintrittsseitigen Schlauchpartie angeschlossen ist und an seiner austrittsseitigen Schlauchpartie eine Austragsöffnung für den Flüssigbeton aufweist, wobei die eintrittsseitige und die austrittsseitige Schlauchpartie an einer Übergangsstelle (30) miteinander verbunden sind, wobei die Biegesteifigkeit der austrittsseitigen Schlauchpartie von der Übergangsstelle (30) an größer als die der eintrittsseitigen Schlauchpartie ist, und wobei die Schlauchpartien (26, 28) unterschiedlicher Biegesteifigkeit ein elastomeres Schlauchmaterial mit unterschiedlicher Wandstärke aufweisen.

3. Verteilermast einer Betonpumpe, insbesondere nach Anspruch 1 oder 2, mit mehreren, an Knickgelenken miteinander verbundenen Mastarmen und einer über die Mastarme geführten, aus mehreren Abschnitten zusammengesetzten, über eine Pumpe mit Flüssigbeton beaufschlagbaren Druckförderleitung, an deren Ende im Bereich der Mastspitze ein senkrecht nach unten hängender, aus biegsamem Material bestehender Endschlauch mit einer eintrittsseitigen Schlauchpartie angeschlossen ist und an seiner austrittsseitigen Schlauchpartie eine Austragsöffnung für den Flüssigbeton aufweist, wobei die eintrittseitige und die austrittsseitige Schlauchpartie an einer Übergangsstelle (30) miteinander verbunden sind, wobei die Biegesteifigkeit der austrittsseitigen Schlauchpartie von der Übergangsstelle (30) an größer als die der eintrittsseitigen Schlauchpartie ist, und wobei die Schlauchpartien (26, 28) unterschiedlicher Biegesteifigkeit ein elastomeres Schlauchmaterial (36) mit unterschiedlichen Einlagen aufweisen.

4. Verteilermast nach Anspruch 3, **dadurch gekennzeichnet, dass** zumindest eine der Schlauchpartien (26, 28) eine Gewebeeinlage (32; 38; 40; 42; 46) enthält.

5. Verteilermast nach einem der Ansprüche 1 bis 4, **dadurch gekennzeichnet, dass** zumindest eine der Schlauchpartien (26, 28) eine Stahldrahteinlage (34; 48) enthält.

6. Verteilermast nach einem der Ansprüche 3 bis 5, **dadurch gekennzeichnet, dass** die Einlagemenge oder -dichte der verschiedenen Schlauchpartien (26, 28) unterschiedlich ist.

7. Verteilermast nach einem der Ansprüche 1 bis 6, **dadurch gekennzeichnet, dass** der Innendurchmesser der Schlauchpartien (26, 28) unterschiedlicher Biegesteifigkeit konstant ist.

8. Verteilermast nach einem der Ansprüche 1 bis 7, **dadurch gekennzeichnet, dass** die Schlauchpartien (26, 28) an der Übergangsstelle (30) einstückig miteinander verbunden sind.

9. Verteilermast nach einem der Ansprüche 1 bis 8, **dadurch gekennzeichnet, dass** die Wandstärke der Schlauchpartien (26, 28) im Übergangsbereich zu- oder abnimmt

10. Verteliermast nach einem der Ansprüche 5 bis 9, **dadurch gekennzeichnet, dass** die Stahldrahteinlagen in den Schlauchpartien höherer Steifigkeit dichter gewickelt sind als in den Schlauchpartien mit niedrigerer Steifigkeit.

11. Verteilermast nach einem der Ansprüche 4 bis 9, **dadurch gekennzeichnet, dass** die Gewebeeinlagen in den Schlauchpartien höherer Steifigkeit dichter geflochten oder gewebt sind als in den Schlauchpartien niedrigerer Steifigkeit.

12. Verteilermast nach einem der Ansprüche 1 bis 11, **dadurch gekennzeichnet, dass** die Schlauchpartien höherer Steifigkeit eine Verstärkungshülle (44) tragen.

13. Verteilermast nach Anspruch 12, **dadurch gekennzeichnet, dass** die Verstärkungshülle aus elastomerern Kunststoff vorzugsweise mit einer Verstärkungseinlage (48) besteht

14. Verteilermast nach einem der Ansprüche 1 bis 13, **dadurch gekennzeichnet, dass** die Schlauchpartien an der Übergangsstelle (30) lösbar miteinander gekoppeit sind.

15. Verteilermast nach einem der Ansprüche 1 bis 14, **dadurch gekennzeichnet, dass** die Schlauchpartie mit größerer Steifigkeit eine Stahleinlage und die schlauchpartie mit kleinerer Steifigkeit eine Gewebeeinlage enthält.

16. Vorteltermast nach einem der Ansprüche 1 bis 15, **dadurch gekennzeichnet, dass** die Druckförderleitung aus mehreren Leitungsabschnitten aus einem Metall oder einem Composite-Material, vorzugsweise aus faserverstärktem Kunststoff mit abriebfester Innenbeschtung, besteht.

## Claims

1. Distributor mast of a concrete pump, having several mast arms connected with one another at bending joints, and having a pressure feed line composed of several segments, guided by way of the mast arms, to which liquid concrete is applied by way of a pump, at the end of which line, in the region of the mast tip, an end hose that hangs down vertically, consisting of flexible material, having an entry-side hose part, is connected, which has a discharge opening for the liquid concrete at its exit-side hose part, whereby the entry-side hose part and the exit-side hose part are connected with one another at a transition point (30), whereby the bending rigidity of the exit-side hose part, starting from the transition point (30), is greater than that of the entry-side hose part, and whereby the hose parts (26, 28) having different bending rigidity have an elastomer hose material (36) having different material hardness.

2. Distributor mast of a concrete pump, particularly according to claim 1, having several mast arms connected with one another at bending joints, and having a pressure feed line composed of several segments, guided by way of the mast arms, to which liquid concrete is applied by way of a pump, at the end of which line, in the region of the mast tip, an end hose that hangs down vertically, consisting of flexible material, having an entry-side hose part, is connected, which has a discharge opening for the liquid concrete at its exit-side hose part, whereby the entry-side hose part and the exit-side hose part are connected with one another at a transition point (30), whereby the bending rigidity of the exit-side hose part, starting from the transition point (30), is greater than that of the entry-side hose part, and whereby the hose parts (26, 28) having different bending rigidity have an elastomer hose material (36) having different wall thickness.

3. Distributor mast of a concrete pump, particularly according to claim 1 or 2, having several mast arms connected with one another at bending joints, and having a pressure feed line composed of several segments, guided by way of the mast arms, to which liquid concrete is applied by way of a pump, at the end of which line, in the region of the mast tip, an end hose that hangs down vertically, consisting of flexible material, having an entry-side hose part, is connected, which has a discharge opening for the liquid concrete at its exit-side hose part, whereby the entry-side hose part and the exit-side hose part are connected with one another at a transition point (30), whereby the bending rigidity of the exit-side hose part, starting from the transition point (30), is greater than that of the entry-side hose part, and whereby the hose parts (26, 28) having different bending rigidity have an elastomer hose material (36) having different inserts.

4. Distributor mast according to claim 3, **characterized in that** at least one of the hose parts (26, 28) contains a woven fabric insert (32; 38; 40; 42; 46).

5. Distributor mast according to one of claims 1 to 4, **characterized in that** at least one of the hose parts (26, 28) contains a steel wire insert (34; 48).

6. Distributor mast according to one of claims 3 to 5, **characterized in that** the insert amount or density of the different hose parts (26, 28) is different.

7. Distributor mast according to one of claims 1 to 6, **characterized in that** the inside diameter of the hose parts (26, 28) having different bending rigidity is constant.

8. Distributor mast according to one of claims 1 to 7, **characterized in that** the hose parts (26, 28) are connected with one another in one piece at the transition point (30).

9. Distributor mast according to one of claims 1 to 8, **characterized in that** the wall thickness of the hose parts (26, 28) increases or decreases in the transition region.

10. Distributor mast according to one of claims 5 to 9, **characterized in that** the steel wire inserts in the hose parts having greater rigidity are wound more tightly than in the hose parts having lower rigidity.

11. Distributor mast according to one of claims 4 to 9, **characterized in that** the woven fabric inserts in the hose parts having greater rigidity are braided or woven more tightly than in the hose parts having lower rigidity.

12. Distributor mast according to one of claims 1 to 11, **characterized in that** the hose parts having greater rigidity carry a reinforcement cover (44).

13. Distributor mast according to claim 12, **characterized in that** the reinforcement cover consists of elastomer plastic, preferably with a reinforcement insert (48).

14. Distributor mast according to one of claims 1 to 13, **characterized in that** the hose parts of the transition point (30) are releasably coupled with one another.

15. Distributor mast according to one of claims 1 to 14, **characterized in that** the hose part having greater rigidity contains a steel insert, and the hose part having lesser rigidity contains a woven fabric insert.

16. Distributor mast according to one of claims 1 to 15, **characterized in that** the pressure feed line consists of several line segments of a metal or a composite material, preferably of fiber-reinforced plastic with a friction-wear-resistant inner coating.

## Revendications

1. Mât répartiteur d'une pompe à béton, comprenant plusieurs bras reliés les uns aux autres au niveau d'articulations coudées ; et un conduit de refoulement sous pression qui est guidé par l'intermédiaire des bras du mât, est composé de plusieurs tronçons et peut être sollicité par du béton fluide, par l'intermédiaire d'une pompe, conduit à l'extrémité duquel, dans la région de la pointe du mât, un tuyau d'extrémité constitué d'un matériau souple, pendant verticalement vers le bas, est raccordé par une extrémité située côté afflux et est muni, sur sa partie située côté sortie, d'un orifice de décharge destiné au béton fluide, les parties dudit tuyau, situées côté afflux et côté sortie, étant reliées l'une à l'autre au niveau d'une zone de transition (30), sachant que la rigidité à la flexion de la partie du tuyau située côté sortie est plus grande, à partir de ladite zone de transition (30), que celle de la partie dudit tuyau qui est située côté afflux, et sachant que les parties (26, 28) du tuyau, dotées de rigidités à la flexion différentes, présentent un matériau élastomère souple (36) à duretés différentes.

2. Mât répartiteur d'une pompe à béton, notamment selon la revendication 1, comprenant plusieurs bras reliés les uns aux autres au niveau d'articulations coudées ; et un conduit de refoulement sous pression qui est guidé par l'intermédiaire des bras du mât, est composé de plusieurs tronçons et peut être sollicité par du béton fluide, par l'intermédiaire d'une pompe, conduit à l'extrémité duquel, dans la région de la pointe du mât, un tuyau d'extrémité constitué d'un matériau souple, pendant verticalement vers le bas, est raccordé par une extrémité située côté afflux et est muni, sur sa partie située côté sortie, d'un orifice de décharge destiné au béton fluide, les parties dudit tuyau, situées côté afflux et côté sortie, étant reliées l'une à l'autre au niveau d'une zone de transition (30), sachant que la rigidité à la flexion de la partie du tuyau située côté sortie est plus grande, à partir de ladite zone de transition (30), que celle de la partie dudit tuyau qui est située côté afflux, et sachant que les parties (26, 28) du tuyau, dotées de rigidités à la flexion différentes, présentent un matériau élastomère souple à épaisseurs de parois différentes.

3. Mât répartiteur d'une pompe à béton, notamment selon la revendication 1 ou 2, comprenant plusieurs bras reliés les uns aux autres au niveau d'articulations coudées ; et un conduit de refoulement sous pression qui est guidé par l'intermédiaire des bras du mât, est composé de plusieurs tronçons et peut être sollicité par du béton fluide, par l'intermédiaire d'une pompe, conduit à l'extrémité duquel, dans la région de la pointe du mât, un tuyau d'extrémité constitué d'un matériau souple, pendant verticalement vers le bas, est raccordé par une extrémité située côté afflux et est muni, sur sa partie située côté sortie, d'un orifice de décharge destiné au béton fluide, les parties dudit tuyau, situées côté afflux et côté sortie, étant reliées l'une à l'autre au niveau d'une zone de transition (30), sachant que la rigidité à la flexion de la partie du tuyau située côté sortie est plus grande, à partir de ladite zone de transition (30), que celle de la partie dudit tuyau qui est située côté afflux, et sachant que les parties (26, 28) du tuyau, dotées de rigidités à la flexion différentes, présentent un matériau élastomère souple (36) à chemisages intérieurs différents.

4. Mât répartiteur selon la revendication 3, **caractérisé par le fait qu'**au moins l'une des parties (26, 28) du tuyau renferme un chemisage intérieur tissé (32 ; 38 ; 40 ; 42 ; 46).

5. Mât répartiteur selon l'une des revendications 1 à 4, **caractérisé par le fait qu'**au moins l'une des parties (26, 28) du tuyau renferme un chemisage intérieur (34 ; 48) en fils d'acier.

6. Mât répartiteur selon l'une des revendications 3 à 5, **caractérisé par le fait que** la quantité ou la densité de chemisage intérieur est différente pour les diverses parties (26, 28) du tuyau.

7. Mât répartiteur selon l'une des revendications 1 à 6, **caractérisé par le fait que** le diamètre intérieur des parties (26, 28) du tuyau, dont les rigidités à la flexion sont différentes, est constant.

8. Mât répartiteur selon l'une des revendications 1 à 7, **caractérisé par le fait que** les parties (26, 28) du tuyau sont solidarisées d'un seul tenant au niveau de la zone de transition (30).

9. Mât répartiteur selon l'une des revendications 1 à 8, **caractérisé par le fait que** l'épaisseur de paroi des parties (26, 28) du tuyau croît ou décroît dans la zone de transition (30).

10. Mât répartiteur selon l'une des revendications 5 à 9, **caractérisé par le fait que** les chemisages intérieurs en fils d'acier présentent un enroulement plus dense, dans les parties du tuyau à rigidité supérieure, que dans les parties dudit tuyau à rigidité moindre.

11. Mât répartiteur selon l'une des revendications 4 à 9, **caractérisé par le fait que** les chemisages intérieurs tissés présentent un tressage ou un tissage plus dense, dans les parties du tuyau à rigidité supérieure, que dans les parties dudit tuyau à rigidité moindre.

12. Mât répartiteur selon l'une des revendications 1 à 11, **caractérisé par le fait que** les parties du tuyau à rigidité supérieure portent une enveloppe de renforcement (44).

13. Mât répartiteur selon la revendication 12, **caractérisé par le fait que** l'enveloppe de renforcement est constituée d'une matière plastique élastomère comportant, de préférence, un chemisage intérieur de renfort (48).

14. Mât répartiteur selon l'une des revendications 1 à 13, **caractérisé par le fait que** les parties du tuyau sont mutuellement accouplées de manière dissociable dans la zone de transition (30).

15. Mât répartiteur selon l'une des revendications 1 à 14, **caractérisé par le fait que** la partie du tuyau à rigidité supérieure renferme un chemisage intérieur en acier, et la partie dudit tuyau à rigidité moindre renferme un chemisage intérieur en tissu.

16. Mât répartiteur selon l'une des revendications 1 à 15, **caractérisé par le fait que** le conduit de refoulement sous pression est composé de plusieurs tronçons en un métal ou en un matériau composite, de préférence en une matière plastique renforcée par des fibres et dotée d'un revêtement intérieur résistant à l'usure par abrasion.
